# EUROPEAN PATENT SPECIFICATION

(11) **EP 3 333 814 B1**
(45) Date of publication and mention of the grant of the patent: **02.11.2022**
(21) Application number: 15904028.6
(22) Date of filing: 14.09.2015
(51) Int. Cl.: G07D 13/00, G07D 9/00, G07F 19/00, G07D 1/04, G07D 11/20

(54) **MONEY PROCESSING SYSTEM**
GELDVERARBEITUNGSSYSTEM
SYSTÈME DE TRAITEMENT DE DEVISES

(43) Date of publication of application: 13.06.2018
(73) Proprietor: Glory Ltd., Himeji-shi, Hyogo 670-8567 (JP)
(72) Inventor: YAMASHITA, Minami, Himeji-shi Hyogo 670-8567 (JP); KIYOSE, Seiji, Himeji-shi Hyogo 670-8567 (JP); EMOTO, Masaya, Himeji-shi Hyogo 670-8567 (JP)
(74) Representative: Jenkins, Peter David
(86) International application number: PCT/JP2015/075989
(87) International publication number: WO 2017/046839

(56) References cited:
- WO-A1-2012/114449
- JP-A- 2010 218 296
- JP-A- 2014 119 880
- JP-A- 2015 043 153
- US-A1- 2015 220 899

## Description

### [Technical Field]

The present invention relates to a money handling system that can handle a large quantity of banknotes and coins, and more particularly relates to a money handling system capable of increasing a storage quantity of coins in response to a requirement from a system user.

### [Background Art]

Conventionally, when a salesclerk performs an operation to receive/pay cash from/to a customer at a check-out counter of a shop, a money handling apparatus called a cash settlement apparatus and a POS (Point Of Sale) register are used. The POS register acquires price information of the product purchased by the customer, the cash settlement apparatus recognizes and counts the money paid by the customer and calculates the amount of money. The caz sh settlement apparatus has a function to store therein the recognized and counted money. When there is a need to pay the change to the customer, the cash settlement apparatus has a function to pay the money stored therein as the change to the customer.

To dispense money to be replenished as a change fund in the cash settlement apparatus used in the transaction with the customer, and to deposit the money collected from the cash settlement apparatus, a money handling apparatus, called a cash counting apparatus, that can process a large quantity of money is used in a back office of the shop. For example, Patent Document 1 discloses a replenishment process and a collection process of money conducted by using a cash transport cassette between a cash settlement apparatus used at a check-out counter and a cash counting apparatus used in a back office. US 2015/220899 A1 discloses similar to the current invention a respective money handling system.

### [Citation List]

### [Patent Document]

[Patent Document 1] PCT Publication No. WO 2012/114449

### [Summary of Invention]

### [Technical Problem]

However, in the conventional cash counting apparatus used in the back office, a shortage of coins may occur. In a shop, it often happens that a banknote is received from the customer and coins are returned as the change. Moreover, several check-out counters are arranged in some shops, and in some cases, several cash settlement apparatuses are set at each of the check-out counters. In contrast, usually, only one cash counting apparatus is set in the back office. Therefore, when continuing the work of supplying the coins, which became short at the cash settlement apparatus of the check-out counter, to the cash settlement apparatus after dispensing those coins from the cash counting apparatus set in the back office, there are instances where a shortage of the coins occurs in the cash counting apparatus.

When a shortage of coins occurs in the cash counting apparatus, coins are transported from the bank to the shop by a cash transport vender (CIT: Cash In Transit). However, as the number of times the coins are transported increases, a fee that the shop must pay to the cash transport vender also increases. On the other hand, some shops have been managing their business by using the conventional cash counting apparatus without such issue on the shortage of coins. Therefore, simply increasing the size of the cash counting apparatus to increase a storage quantity of coins is not a good approach as it will lead to increase in the space and costs required to install the apparatus.

The present invention is made to address the problems in the conventional technology. One object of the present invention is to provide a money handling system capable of increasing based on the requirement of a shop a storage quantity of coins of a money handling apparatus used in a back office.

### [Means for Solving Problems]

To solve the above problems and to achieve the above object, a money handling system according to the present invention is disclosed in claim 1.

In the above money handling system, the terminal apparatus selects, based on a denomination and a quantity of coins stored in each coin handling apparatus, the at least one coin handling apparatus to perform the instructed process from among the plurality of coin handling apparatuses.

In the above money handling system, the terminal apparatus selects one coin handling apparatus capable of handling all coins to be processed in the instructed process, as the at least one coin handling apparatus to perform the instructed process.

In the above money handling system, when the instruction is for performing the coin dispensing process that includes specification of a denomination and a quantity of coins to be dispensed, the terminal device selects the at least one coin handling apparatus to perform the instructed process such that the coins of the same denomination are dispensed from the same coin handling apparatus.

In the above money handling system, the terminal apparatus selects, based on a positional relationship of installation positions of the plurality of coin handling apparatuses, the at least one coin handling apparatus to perform the instructed process from among the plurality of coin handling apparatuses.

In the above money handling system, after selecting the at least one coin handling apparatus to perform the instructed process from among the plurality of coin handling apparatuses, the terminal apparatus notifies of selected at least one coin handling apparatus.

In the above money handling system, the terminal apparatus displays a thumbnail image of each coin handling apparatus in accordance with the installation positions of the plurality of coin handling apparatuses, and notifies selection result by displaying the thumbnail image of the selected at least one coin handling apparatus to perform the instructed process, in a distinguishable manner from the thumbnail images of other coin handling apparatuses.

In the above money handling system, after an instructed coin deposit process is performed by the at least one coin handling apparatus selected from among the plurality of coin handling apparatuses, if there is a reject coin that is rejected without being stored in the at least one coin handling apparatus, the terminal apparatus notifies of instructions to deposit the reject coin in another coin handling apparatus.

In the above money handling system, the banknote handling apparatus, the plurality of coin handling apparatuses, and the terminal apparatus constitute a cash counting apparatus.

### [Advantageous Effects of Invention]

According to the present invention, it is possible to increase a storage quantity of coins based on the requirement of a shop by increasing the number of coin handling apparatuses constituting a money handling apparatus used in a back office. The coin handling apparatus to perform a deposit process or a dispensing process that is instructed by an operator is automatically selected from among the plurality of coin handling apparatuses. The selected coin handling apparatus is notified to the operator, and therefore the operator can easily perform the deposit process or the dispensing process.

Moreover, according to the present invention, priority used in automatic selection of the coin handling apparatus can be set. For example, it is possible to set so as to give priority to the coin handling apparatus installed near the operator to minimize the movement of the operator who performs a deposit/dispensing process. Alternatively, it is possible to set so as to give priority to the coin handling apparatus in which the all coins can be processed for the deposit/dispensing process in one apparatus. When there is no coin handling apparatus in which the deposit or the dispensing of all coins can be executed in one apparatus, the priority can be set such that the coins of the same denomination are deposited to or dispensed from the same coin handling apparatus. Accordingly, the operator can easily perform the deposit/dispensing process.

Furthermore, according to the present invention, the coin handling apparatus to perform the deposit/dispensing process is notified by displaying on a screen of a terminal apparatus an image corresponding to the external appearance of each of the plurality of coin handling apparatuses actually installed. As a result, even if the coin handling apparatuses have the identical external appearance, the operator can recognize the coin handling apparatus to perform the deposit/dispensing process.

### [Brief Description of Drawings]

FIG. 1 is a block diagram of a configuration example of a cash management system according to the present embodiment.
FIG. 2 is a block diagram of a configuration of a cash counting apparatus included in the cash management system.
FIG. 3 is a block diagram indicating a schematic functional configuration of the cash counting apparatus.
FIG. 4 is a perspective view of an external appearance of the cash counting apparatus.
FIGS. 5A and 5B are schematic cross sections indicating an internal configuration of a banknote counting apparatus constituting the cash counting apparatus.
FIGS. 6A and 6B are schematic cross sections indicating an internal configuration of a coin counting apparatus constituting the cash counting apparatus.
FIG. 7 is an explanatory view of a correspondence between operators and menus of money processing displayed on a terminal apparatus constituting the cash counting apparatus.
FIG. 8 is an explanatory view of a correspondence between a type of an authentication process performed in the cash counting apparatus and the processing menu.
FIGS. 9A and 9B are exemplary screens displayed on the terminal apparatus in which a different processing menu is displayed depending on the operator.
FIG. 10 is an exemplary screen displayed on the terminal apparatus when the money handling is executed in the cash counting apparatus.
FIG. 11 is a flowchart of a coin deposit process executed in the coin counting apparatus.
FIG. 12 is a flowchart of a coin dispensing process executed in the coin counting apparatus.

### [Description of Embodiments]

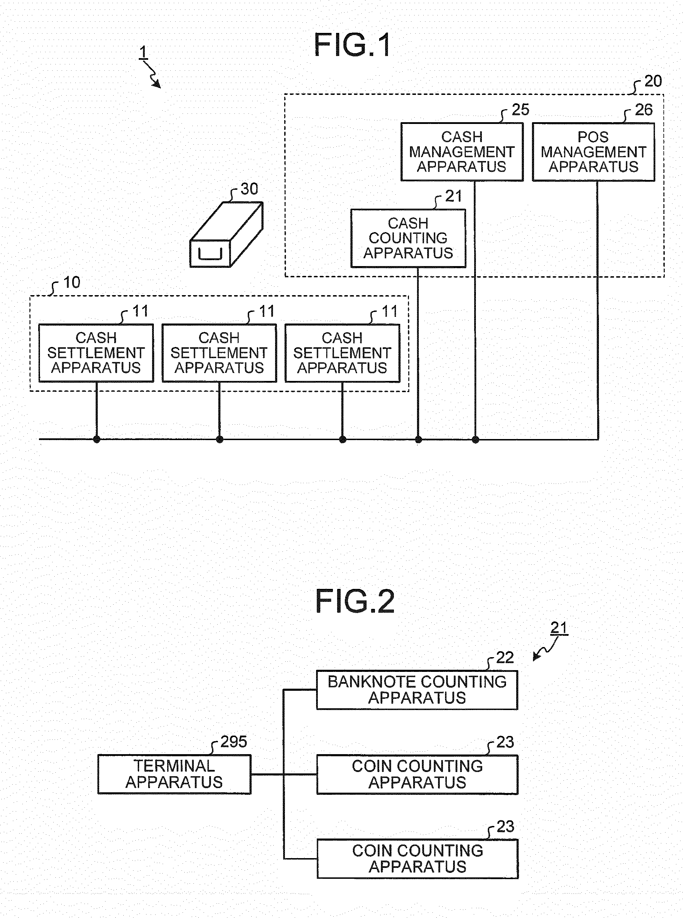

Exemplary embodiments of a money handling system according to the present invention are explained below with reference to the accompanying drawings. FIG. 1 is a block diagram indicating a configuration example of a cash management system (money handling system) 1 according to the present embodiment. The cash management system 1 is a system that performs handling and management of cash that a salesclerk receives from a customer and cash that the salesclerk pays to the customer.

The cash management system 1 is established to include a check-out counter 10, which is arranged in a check out area in a shop, to perform deposit and dispensing of cash that is paid/received between a salesclerk and a customer, a back office 20 to manage cash of the check-out counter 10 and products, and a cash transport cassette 30 used when transporting cash between the check-out counter 10 and the back office 20.

A cash settlement apparatus 11 is installed at the check-out counter 10. A cash settlement process is performed with the customer by using the cash settlement apparatus 11 that performs deposit of cash and dispensing of cash. The cash settlement apparatus 11 is operated by the salesclerk or the customer. For example, the cash settlement apparatus 11 is used to perform deposit of the cash paid by the customer and dispensing of the change to be returned to the customer. In FIG. 1, an example is shown in which the check-out counter 10 includes a plurality of the cash settlement apparatuses 11; however, the number of the cash settlement apparatuses 11 is not particularly limited. Depending on the scale and the like of the shop, only one cash settlement apparatus 11 may be arranged in the check-out counter 10.

The cash settlement apparatus 11 is communicably connected, for example, to a POS register operated by the salesclerk or a self-checkout register operated by the customer. The cash settlement apparatus 11 can be integrated with the POS register or the self-checkout register.

The back office 20 includes a cash counting apparatus (money handling apparatus) 21, a cash management apparatus 25, and a POS management apparatus 26. These apparatuses are communicably connected to each other via a LAN (Local Area Network) and the like. The cash settlement apparatus 11 is also connected to the LAN. The cash counting apparatus 21 performs processes including a dispensing process of a change fund to be replenished in the cash settlement apparatus 11, and a deposit process of sales proceeds collected from the cash settlement apparatus 11. The cash management apparatus 25 manages the cash stored in the cash settlement apparatuses 11 and the cash counting apparatus 21. The cash management apparatus 25 manages, for example, cash processed in a cash settlement process in each of the cash settlement apparatuses 11, and cash moved between the cash settlement apparatus 11 and the cash counting apparatus 21. The cash management apparatus 25 has a function to monitor whether the cash transport cassette 30 has been mounted in the cash settlement apparatus 11 or the cash counting apparatus 21. The POS management apparatus 26 manages information about the products such as a product price, a quantity of stock, and the like. The function of the POS management apparatus 26 is not directly related to the present embodiment, and therefore the detailed explanation thereof will be omitted herefrom.

The cash transport cassette 30 can be detachably attached to the cash settlement apparatus 11, and also detachably attached to the cash counting apparatus 21. Cash can be moved between the cash settlement apparatus 11 and the cash transport cassette 30 mounted in the cash settlement apparatus 11. Cash can be moved between the cash counting apparatus 21 and the cash transport cassette 30 mounted in the cash counting apparatus 21. The salesclerk carries the cash by using the cash transport cassette 30 when replenishing the change fund, collecting the sales proceeds, and the like. The cash transport cassette 30 has a configuration that does not allow taking out of the cash stored in the cash transport cassette 30 while the cash transport cassette 30 has been detached from the cash settlement apparatus 11 and the cash counting apparatus 21 and is being carried. No one can touch the cash stored in the cash transport cassette 30 while the cash is being carried, and therefore the cash can be carried safely with high security.

Depending on the money to be carried, the cash transport cassette 30 is configured to carry at least one of banknotes and coins. The cash transport cassette 30 to carry the banknotes can be, for example, a stacking-type cassette in which the banknotes are stored in a stacked manner, or a tape-reel type cassette in which the banknotes are sandwiched one by one between a plurality of tapes and stored by reeling the tapes along with the banknotes. The cash transport cassette 30 to carry the coins can be one in which the coins are stored in a denomination mixed state, or can be one in which the coins are stored by denomination in several compartments.

The configuration and the operation of each of the cash settlement apparatus 11, the cash management apparatus 25, the cash counting apparatus 21, the cash transport cassette 30, and the like, have been explained in detail in PCT Publication No. WO 2012/114449 filed by the same applicant. Accordingly, the contents that have been already explained will be omitted herefrom, and matters relating to the present invention will be explained mainly below.

FIG. 2 is a block diagram indicating a configuration of the cash counting apparatus 21 according to the present embodiment. The cash counting apparatus 21 includes a banknote counting apparatus (banknote handling apparatus) 22 that performs a deposit process of banknotes and a dispensing process of banknotes, two coin counting apparatuses (coin handling apparatus) 23 that perform a deposit process of coins and a dispensing process of coins, and a terminal apparatus 295 used to perform an operation relating to the deposit process and the dispensing process performed in these apparatuses 22 and 23.

The banknote counting apparatus 22 is a money handling apparatus that handles banknotes. The banknote counting apparatus 22 is used to dispense the banknotes to be replenished in the cash settlement apparatus 11, and to deposit the banknotes collected from the cash settlement apparatus 11. The coin counting apparatus 23 is a money handling apparatus that handles coins. The coin counting apparatus 23 is used to dispense the coins to be replenished in the cash settlement apparatus 11, and to deposit the coins collected from the cash settlement apparatus 11. Because the coin counting apparatuses 23 constituting the cash counting apparatus 21 are the money handling apparatuses having the same configuration and function, the same reference numeral has been assigned to all the coin counting apparatuses 23.

The terminal apparatus 295 is, for example, a computer having a touch screen-type liquid crystal display unit. Information relating to the deposit process and dispensing process of the cash can be input by operating the terminal apparatus 295. Information relating to the cash counting apparatus 21 and the deposit/dispensing process can be confirmed by seeing the information displayed on the terminal apparatus 295. The terminal apparatus 295 is communicably connected to the cash settlement apparatus 11 and the cash management apparatus 25. Information relating to the cash settlement apparatus 11, information relating to the cash transport cassette 30, and the like can be displayed on the terminal apparatus 295, and can be confirmed by the operator.

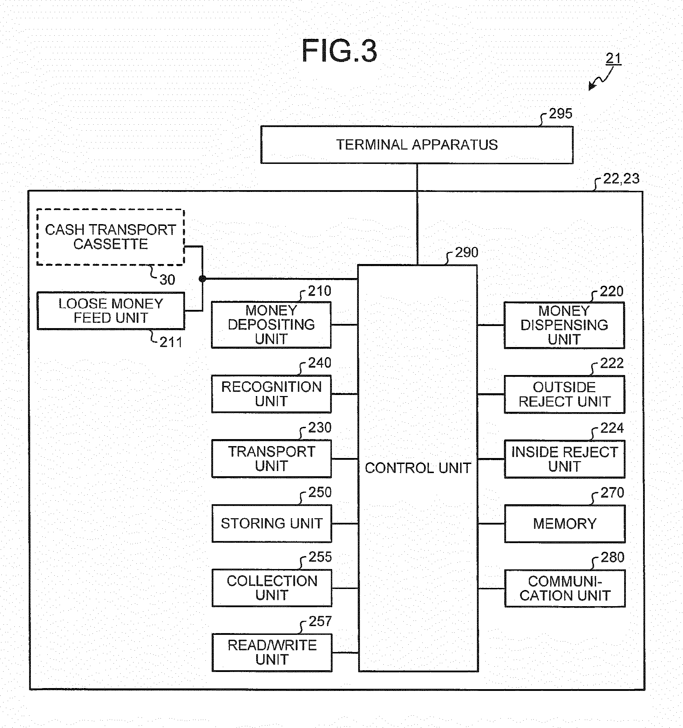

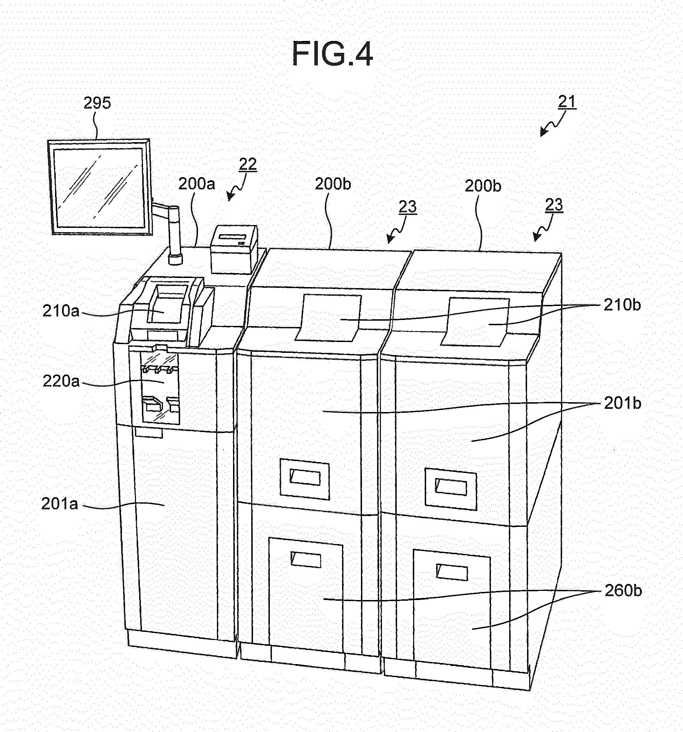

FIG. 3 is a block diagram of a schematic functional configuration of the cash counting apparatus 21. Because the handling target of the banknote counting apparatus 22 and that of the coin counting apparatus 23 are different, that is, the banknotes and the coins, the concrete configurations of these two apparatuses are different. However, the basic block configuration of these apparatuses is the same as that shown in FIG. 3. As shown in FIG. 4, the terminal apparatus 295 is arranged in an upper part of the banknote counting apparatus 22. The operator can operate all the apparatuses 22 and 23 constituting the cash counting apparatus 21 by using the terminal apparatus 295. The operator can also confirm the information relating to the apparatuses 22 and 23 by using the terminal apparatus 295.

As shown in FIG. 3, the cash counting apparatus 21 includes, in addition to a money depositing unit 210, a money dispensing unit 220, and the terminal apparatus 295, a transport unit 230, a recognition unit 240, storing units 250, a collection unit 255, a read/write unit 257, an outside reject unit 222, an inside reject unit 224, a memory 270, a communication unit 280, and a control unit 290.

One between a loose money feed unit 211 and the cash transport cassette 30 can be selectively mounted in the money depositing unit 210 of the cash counting apparatus 21. For example, when the salesclerk wants to deposit loose money in the cash counting apparatus 21, the loose money feed unit 211 is mounted in the money depositing unit 210. The loose money can be deposited in the apparatus from the money depositing unit 210 by loading the loose money in the loose money feed unit 211. When the salesclerk wants to deposit the cash in the cash counting apparatus 21 by using the cash transport cassette 30, the cash transport cassette 30 is mounted in the money depositing unit 210 in replacement of the loose money feed unit 211. That is, in the money depositing unit 210 of the cash counting apparatus 21, the loose money feed unit 211 used to deposit the loose money can be removed and instead the cash transport cassette 30 can be mounted.

The transport unit 230 transports to the storing units 250 the cash received in the money depositing unit 210, and transports from the storing units 250 the cash to be discharged from the money dispensing unit 220. The transport unit 230 transports the cash from the storing units 250 to the cash transport cassette 30, and transports the cash from the cash transport cassette 30 to the storing units 250.

The recognition unit 240 recognizes a denomination, authenticity, fitness, version, quantity, and the like of the cash transported by the transport unit 230. For example, the recognition unit 240 includes sensors such as a magnetic sensor, a fluorescence sensor, a metal thread sensor, a thickness sensor, and an image sensor. The recognition unit 240 counts a quantity of the cash by denomination.

The storing units 250 store therein by denomination the cash recognized by the recognition unit 240. When the storing units 250 are used to store the banknotes, the stacking-type storing unit and the tape-reel type storing unit can be used as the storing units 250.

The read/write unit 257 can read information stored in a memory arranged in the cash transport cassette 30, and write information in this memory.

The memory 270 includes a ROM or an HDD, which is a nonvolatile storage device, capable of storing therein various computer programs and data used to control the cash counting apparatus 21, and a RAM and the like, which is a volatile storage device, used as a loading area for the computer program and a work area used when executing the computer program. Moreover, the memory 270 is used to store information (the denomination, the quantity, and the like) of the cash stored in each of the storing units 250 and the cash transport cassette 30. Furthermore, the memory 270 is used to store information relating to the quantity of the cash by denomination recognized by the recognition unit 240.

The communication unit 280 is communicably connected to the cash settlement apparatus 11, the cash management apparatus 25, the POS management apparatus 26, and the like, constituting the cash management system 1. The control unit 290 is an arithmetic processing unit capable of executing the computer programs stored in the memory 270 thereby controlling the entire cash counting apparatus 21.

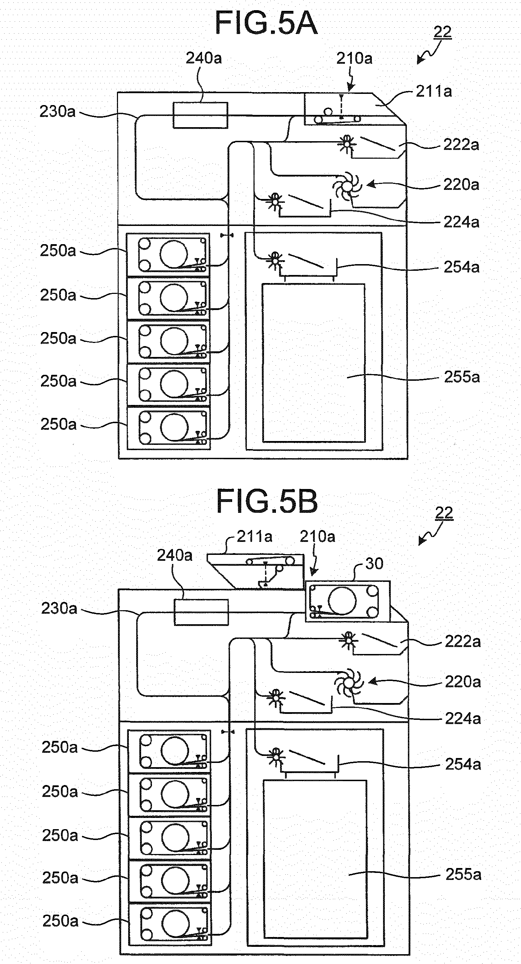

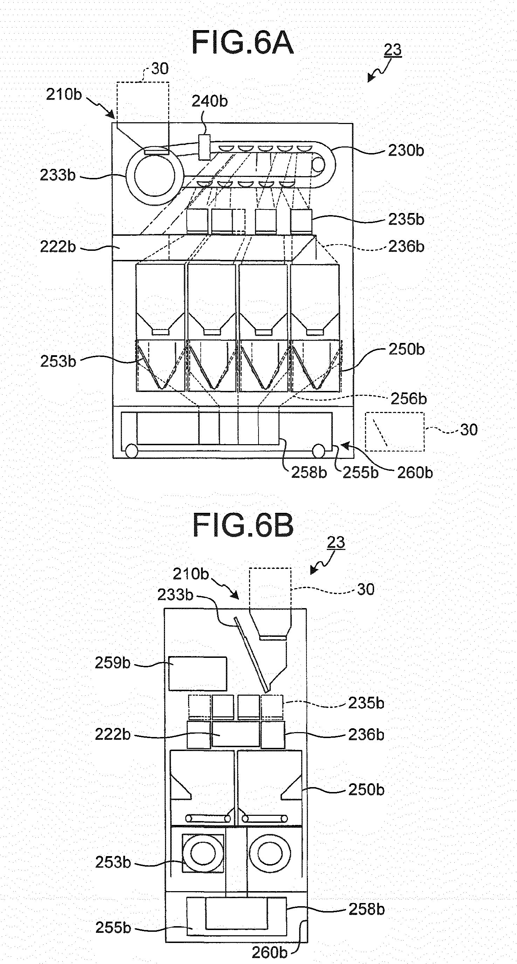

The configurations of the cash counting apparatus 21, the banknote counting apparatus 22, and the coin counting apparatus 23 are explained below by referring FIGS. 4 to 6B. FIG. 4 is a perspective view of an external appearance of the cash counting apparatus 21. FIGS. 5A and 5B are schematic cross sections of an internal configuration of the banknote counting apparatus 22 when seen from a side. FIG. 5A shows a state in which a loose banknote feed unit 211a is used in the money depositing unit 210. FIG. 5B shows a state in which the cash transport cassette 30 is used in the money depositing unit 210. FIGS. 6A and 6B are schematic cross sections of an internal configuration of the coin counting apparatus 23. FIG. 6A shows a state seen from a side, and FIG. 6B shows a state seen from a front.

In FIGS. 4 to 6B, to distinguish the structural components of the banknote counting apparatus 22 and the structural components of the coin counting apparatus 23 corresponding to the structural components shown in FIG. 3, "a" is appended at the end of the reference numerals of the structural components of the banknote counting apparatus 22, and "b" is appended at the end of the reference numerals of the structural components of the coin counting apparatus 23.

As shown in FIG. 4, the banknote counting apparatus 22 and the coin counting apparatus 23 are arranged side by side such that upper surfaces, back surfaces, and front surfaces of the housings of these apparatuses are arranged substantially in one plane. The installation position of the coin counting apparatus 23 with respect to the banknote counting apparatus 22 is not particularly limited. That is, the coin counting apparatus 23 can be installed on the right side or the left side of the banknote counting apparatus 22. Moreover, the cash counting apparatus 21 can include only one coin counting apparatus 23, or can include three or more coin counting apparatuses 23. In the present embodiment, an example of the cash counting apparatus 21 including two coin counting apparatuses 23 is explained.

As shown in FIG. 4, the banknote counting apparatus 22 includes a housing 200a, a money depositing unit 210a, a money dispensing unit 220a, and the terminal apparatus 295. The money depositing unit 210a is for receiving the banknotes. As shown in FIGS. 5A and 5B, the loose banknote feed unit 211a used for feeding loose banknotes or the cash transport cassette 30 is selectively mounted in the money depositing unit 210a. In the money depositing unit 210a, it is possible to deposit the loose banknotes without using the cash transport cassette 30, and it is also possible to deposit the banknotes from the cash transport cassette 30. The money dispensing unit 220a is for discharging the banknotes. The money dispensing unit 220a can dispense the loose banknotes without using the cash transport cassette 30. As shown in FIGS. 5A and 5B, when a front cover 201a of the banknote counting apparatus 22 shown in FIG. 4 is opened, a collection unit 255a and storing units 250a are arranged inside the banknote counting apparatus 22.

As shown in FIG. 4, the coin counting apparatus 23 includes a housing 200b, a money depositing unit 210b, and a drawer mounting unit 260b that functions as a money dispensing unit 220b. The money depositing unit 210b is for receiving the coins. As shown in FIGS. 6A and 6B, the loose coins can be directly received in the money depositing unit 210b. Alternatively, the cash transport cassette 30 is mounted in the money depositing unit 210b and the loose coins can be received in the money depositing unit 210b from the cash transportation cassette 30. The drawer mounting unit 260b is used for discharging the coins. Any one of a drawer 258b for storing the coins by denomination and the cash transport cassette 30 can be selectively mounted in the drawer mounting unit 260b. Therefore, it is possible to dispense the coins to the drawer 258b from the drawer mounting unit 260b without using the cash transport cassette 30, and it is possible to dispense the coins to the cash transport cassette 30. As shown in FIGS. 6A and 6B, when a front cover 201b of the coin counting apparatus 23 shown in FIG. 4 is opened, storing units 250b are arranged inside the coin counting apparatus 23.

When depositing the loose banknote, as shown in FIG. 5A, the salesclerk mounts the loose banknote feed unit 211a in the money depositing unit 210a. When the salesclerk puts the banknotes in the loose banknote feed unit 211a, the loose banknote feed unit 211a feeds the banknotes one by one to a transport unit 230a. The transport unit 230a first transports the fed banknote to the recognition unit 240a, and then transports the banknote to any one of the storing units 250a, a collection and stacking unit 254a, and an outside reject unit 222a. The recognition unit 240a recognizes the denomination, authenticity, fitness, version, quantity, and the like of the transported banknote. The transport unit 230a stores the banknote in one of the storing units 250a by denomination based on the recognition result obtained by the recognition unit 240a.

The transport unit 230a transports the banknote to the collection and stacking unit 254a as needed such as when the corresponding storing unit 250a is full of stored banknotes. When the number of banknotes stacked in the collection and stacking unit 254a exceeds a predetermined number, the next banknote is stored in the collection unit 255a. The transport unit 230a rejects a reject banknote, which is a banknote that cannot be recognized in the recognition unit 240a and/or a banknote that is recognized as being a counterfeit note, to the outside reject unit 222a.

For dispensing the banknotes, the storing units 250a have a configuration that feeds the banknotes stored therein one by one to the transport unit 230a. The transport unit 230a transports the fed banknote. The banknotes are discharged from the money dispensing unit 220a. While the banknote is being transported, if a transport error, such as multifeed, chaining, and skew, is detected by a sensor arranged in a transport path, the transport unit 230a transports this banknote to the inside reject unit 224a.

In this manner, in the banknote counting apparatus 22, the banknotes received in the money depositing unit 210a can be stored in the storing units 250a, and the banknotes stored in the storing units 250a can be discharged to the money dispensing unit 220a. That is, the banknote counting apparatus 22 can reuse the deposited banknote for dispensing.

As shown in FIG. 5B, after pivoting the loose banknote feed unit 211a upward, the cash transport cassette 30 can be mounted in the money depositing unit 210a in replacement of the loose banknote feed unit 211a. The banknote counting apparatus 22 performs the deposit process in which the banknotes are transported from the cash transport cassette 30 to the storing units 250a. The banknote counting apparatus 22 also performs the dispensing process in which the banknotes are transported from the storing units 250a to the cash transport cassette 30. When dispensing the banknotes from the banknote counting apparatus 22 for replenishing into the cash settlement apparatus 11, the banknotes are fed from the storing units 250a and transported by the transport unit 230a, and the banknotes are stored in the cash transport cassette 30. In the middle of transporting of the banknotes during the dispensing process, if it is detected by the sensor that the transport error, such as the multifeed, the chaining, and the skew, has occurred, the transport unit 230a stores this banknote in the inside reject unit 224a.

When collecting the banknotes from the cash settlement apparatus 11 and depositing the collected banknotes in the banknote counting apparatus 22, the collected banknotes that have been stored in the cash transport cassette 30 are fed one by one from the cash transport cassette 30, and these banknotes are transported by the transport unit 230a to and stored in the storing units 250a. In the middle of transporting of the banknotes during the deposit process, if it is detected by the sensor that the transport error, such as the multifeed, the chaining, and the skew, has occurred, the transport unit 230a stores this banknote in the outside reject unit 222a.

In this manner, it is possible to dispense in the cash transport cassette 30 from the banknote counting apparatus 22 the banknotes to be replenished in the cash settlement apparatus 11. It is also possible to deposit in the banknote counting apparatus 22 from the cash transport cassette 30 the banknotes collected from the cash settlement apparatus 11.

As shown in FIGS. 6A and 6B, the coin counting apparatus 23 includes the money depositing unit 210b. The coins collected from the cash settlement apparatus 11 and stored in the cash transport cassette 30 can be deposited in the coin counting apparatus 23. The coin counting apparatus 23 includes the drawer mounting unit 260b in which the collection unit 255b or the cash transport cassette 30 can be mounted. By mounting the cash transport cassette 30 in the drawer mounting unit 260b, the coins to be replenished in the cash settlement apparatus 11 can be dispensed in the cash transport cassette 30 in a separated manner by denomination.

When depositing the loose coins, the salesclerk puts the coins into the money depositing unit 210b. At this time, the coins can be put in a state in which coins of several denominations are mixed. A disk-shaped feed unit 233b feeds the coins received in the money depositing unit 210b to a transport unit 230b one by one. The transport unit 230b transports the fed coins to the recognition unit 240b and then transports the coins to a temporarily storing unit 235b. One temporarily storing unit 235b is arranged per denomination to temporarily hold the coins by denomination.

The recognition unit 240b recognizes the denomination, authenticity, fitness, version, quantity, and the like of the transported coins. The transport unit 230b sorts the coins by denomination based on the recognition result obtained by the recognition unit 240b, and stores the coins in the temporarily storing unit 235b corresponding to the denomination of the coin.

Each of the temporarily storing units 235b communicates with the storing unit 250b of the corresponding denomination via a chute 236b. After all the received coins are temporarily held in the temporarily storing units 235b, the coins inside the temporarily storing units 235b are stored in the storing units 250b by denomination.

The transport unit 230b transports the coins to an overflow box 259b as needed such as when the corresponding storing unit 250b is full of coins. The transport unit 230b transports the coins to the overflow box 259b also when the corresponding temporarily storing unit 235b is full of coins. When it is recognized by the recognition unit 240b in the deposit process that the coin is a reject coin, the transport unit 230b transports this reject coin to an outside reject unit 222b.

On the other hand, when dispensing the loose coins, the storing unit 250b feeds the coins one by one to the transport unit 230b. The coins are being stored in the storing units 250b by denomination. Each of the storing units 250b includes a disk-shaped feed unit 253b. The feed unit 253b feeds coins one by one and transports the coins to the drawer 258b via a chute 256b. The drawer 258b that functions as a coin money dispensing unit is configured to accommodate coins by denomination. The chute 256b also discharges the coins by denomination. As a result, the coin counting apparatus 23 can dispense the coins in the drawer 258b by denomination. However, the coins can be stored in the collection unit 255b in a denomination mixed state.

In this manner, in the coin counting apparatus 23, the coins inserted in the money depositing unit 210b can be stored in the storing units 250b, and the coins stored in the storing units 250b can be discharged to the drawer 258b. That is, the coin counting apparatus 23 can reuse the deposited coin for dispensing.

In the coin counting apparatus 23, it is possible to mount the cash transport cassette 30 in the money depositing unit 210b, and deposit the coins, which were collected in the cash transport cassette 30 from the cash settlement apparatus 11, to the coin counting apparatus 23. When the salesclerk mounts the cash transport cassette 30 in the money depositing unit 210b, the coins are put into the feed unit 233b from the cash transport cassette 30. At this time, the coins may be received in the denomination mixed state. Subsequent processes of the received coins are similar to the processes of the loose coins put into the money depositing unit 210b. As a result, the received coins can be stored in the storing units 250b by denomination.

In the coin counting apparatus 23, it is possible to mount the cash transport cassette 30 in the drawer mounting unit 260b in replacement of the collection unit 255b. It is possible to dispense in the cash transport cassette 30 from the coin counting apparatus 23 the coins to be replenished in the cash settlement apparatus 11. In this case, like when dispensing the loose coins, the coins inside the storing units 250b are fed and stored in the cash transport cassette 30 via the chute 256b. At this time, the coins stored in the cash transport cassette 30 can be in the denomination mixed state.

In this manner, in the coin counting apparatus 23, it is possible to discharge the coins stored in the cash transport cassette 30 and store those coins in the storing units 250b. It is also possible to discharge the coins stored in the storing units 250b and store those coins in the cash transport cassette 30.

For example, the cash counting apparatus 21 installed in the back office 20 of a tenant (shop) may be used by several tenant parties such as a cashier working at the check-out counter 10 of the tenant, a tenant manager who manages the tenant, an area manager who manages the several tenants present in a predetermined area. In addition, a person in charge of the cash transport vender, who collects the money from the cash counting apparatus 21 to transport the collected money to the banks and the like and loads the money transported from the banks and the like in the cash counting apparatus 21, will also operate the cash counting apparatus 21. In the cash counting apparatus 21, a different and appropriate processing menu is displayed on the terminal apparatus 295 depending on a type of the operator.

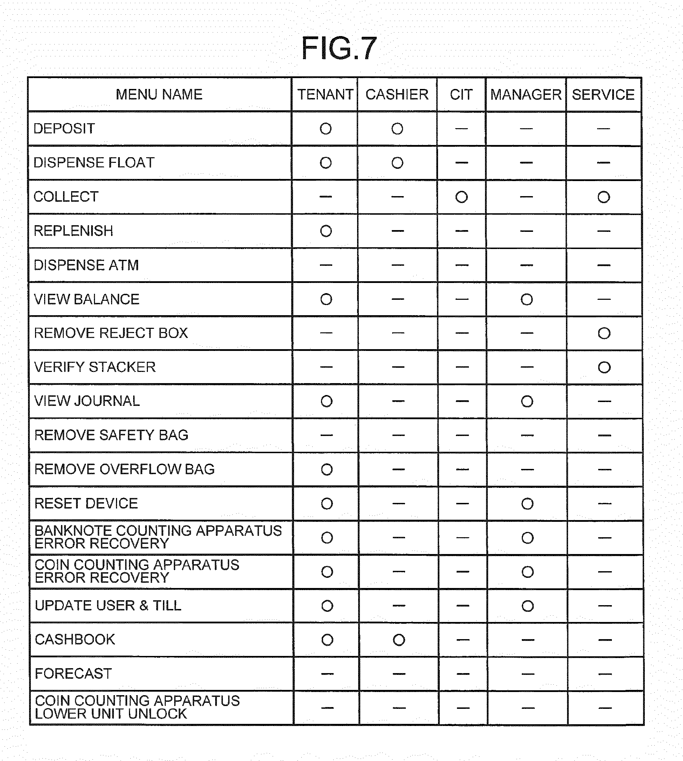

FIG. 7 shows a correspondence relation between a menu of a processing performed in the cash counting apparatus 21 and various operators. "Menu Name" shown in FIG. 7 indicates a name of the processing executable in the cash counting apparatus 21. Under an item "Tenant", a hollow circle is shown corresponding to the processing menu when that menu is to be displayed for the tenant manager. Similarly, under an item "Cashier", a hollow circle is shown corresponding to the processing menu when that menu is to be displayed for the cashier of the tenant. Under an item "CIT", a hollow circle is shown corresponding to the processing menu when that menu is to be displayed for the cash transport vender. Under an item "Manager", a hollow circle is shown corresponding to the processing menu when that menu is to be displayed for the area manager who manages the several tenants. Moreover, under an item "Service", a hollow circle is shown corresponding to the processing menu when that menu is to be displayed for the tenant manager and the area manager. A correspondence relation between a type of the operator and the processing menu shown in FIG. 7 is managed in the terminal apparatus 295. A setting of this correspondence relation can be changed as desired depending on the practice followed in the shops.

When beginning the operation of the cash counting apparatus 21, an authentication process is performed first, and only an authorized person is allowed to execute the processing menu relating to the money handling. In the terminal apparatus 295, based on the information acquired during the authentication process, it is determined whether the operator who is about to use the cash counting apparatus 21 is the tenant manager, the cashier, the cash transport vender, or the area manager. When the operator is determined as an authorized operator, the processing menu that corresponds to the authorized operator is displayed on the screen of the terminal apparatus 295.

The authentication process performed in the terminal apparatus 295 is performed by using a dedicated authentication unit connected to the terminal apparatus 295. This authentication unit includes a card reader. When the card reader reads information from the card about an owner of this card who desires to operate the cash counting apparatus 21, the authentication unit executes the authentication process based on the read information. The authentication unit inputs information relating to the authentication result into the terminal apparatus 295. Based on the information received from the authentication unit, the terminal apparatus 295 determines the type of the authorized operator and displays the processing menu corresponding to the operator.

In the cash counting apparatus 21, in normal conditions, the authentication process is performed when the operator is simply passing his/her card through the authentication unit. However, in situations in which the authentication cannot be performed by using the card, such as when the authentication unit is not functioning and/or when the card is abnormal, the terminal apparatus 295 can perform emergency authentication. Specifically, information such as an operator ID and a password necessary for the authentication of the operator is managed in the terminal apparatus 295, and in case of an emergency, the authentication process can be performed by using a user ID and a password input by operating the terminal apparatus 295.

In the cash counting apparatus 21, in addition to authenticating one operator, the authentication process can be performed for multiple persons. In the following, a concrete example of authentication of multiple persons performed in the cash counting apparatus 21 installed in the back office 20 of the tenant is explained.

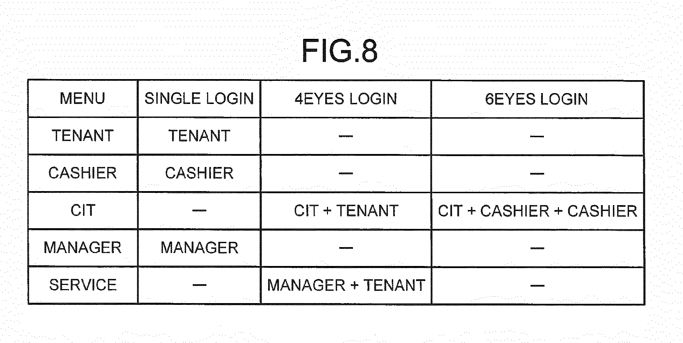

FIG. 8 is an explanatory view of a correspondence relation between a processing menu displayed on the screen of the terminal apparatus 295 and a type of login. The single login is an authentication process performed by one person, The four-eyes login is an authentication process performed by two persons, and the six-eyes login is an authentication process performed by three persons.

For example, when the operator authenticated in an authenticating process is the tenant manager ("Tenant" under "Single login" in FIG. 8), a menu display for "Tenant" is selected. As a result, the processing menu corresponding to "Tenant" shown in FIG. 7 is displayed on the screen of the terminal apparatus 295. Similarly, if the operator who executes the single login is authorized as the cashier, the processing menu corresponding to "Cashier" shown in FIG. 7 is displayed. If the operator who executes the single login is authorized as the area manager, the processing menu corresponding to "Manager" shown in FIG. 7 is displayed.

The four-eyes login is an authentication process in which the operation of the cash counting apparatus 21 is allowed only when two persons are authenticated in succession. For example, when a person belonging to the cash transport vender is authenticated as "CIT" in the authenticating process, "CIT" is not included in the operators to whom the single login is allowed in the cash counting device 21 as shown in FIG. 8, and therefore no processing menu is displayed on the screen of the terminal apparatus 295. In this case, information that demands to successively perform the authenticating process of one more person is displayed. In response, when the authenticating process is performed by the tenant manager and he/she is authenticated as "Tenant" as shown in FIG. 8, it is determined that a condition "CIT+Tenant" in which the four-eyes login is allowed has been fulfilled, and the authentication process is completed. In response to the authentication result of the four-eyes login, a menu for "CIT" is selected as shown in FIG. 8, and the processing menu corresponding to "CIT" shown in FIG. 7 is displayed on the screen of the terminal apparatus 295.

When the area manager is authenticated as "Manager" in the authenticating process, as shown in FIG. 8, because "Manager" is included in the operators to whom the single login is allowed, the processing menu corresponding to "Manager" is displayed on the screen of the terminal apparatus 295. At this time, instead of performing the money handling, if the tenant manager successively performs the authenticating process and he/she is accepted as "Tenant", it is determined that a condition "Manager+Tenant" shown in FIG. 8 in which the four-eyes login is allowed has been fulfilled, and the authentication process is completed. In response to the authentication result of the four-eyes login, a menu for "Service" is selected as shown in FIG. 8, and the processing menu corresponding to "Service" shown in FIG. 7 is displayed on the screen of the terminal apparatus 295.

Similarly, in the six-eyes login, when a person belonging to the cash transport vender and two cashiers are authenticated in succession, it is determined that a condition "CIT+Cashier+Cashier" shown in FIG. 8 in which the six-eyes login is allowed has been fulfilled, and the authentication process is completed. In response to the authentication result of the six-eyes login, the menu for "CIT" is selected as shown in FIG. 8, and the processing menu corresponding to "CIT" shown in FIG. 7 is displayed on the screen of the terminal apparatus 295.

In this manner, in the cash counting apparatus 21, the CIT menu that permits collection of all the money stored in the cash counting apparatus 21 is not displayed when only one person is authenticated. That is, the CIT menu is displayed only when one of the following is fulfilled: when one person belonging to the cash transport vender and one tenant manager are authenticated in succession ("CIT+Tenant" of the four-eyes login), and when one person belonging to the cash transport vender and two cashiers, total three persons, are authenticated in succession ("CIT+Cashier+Cashier" of the six-eyes login). Similarly, the Service menu that permits collection of the money ("Collect" shown in FIG. 7), taking out of the reject money ("Remove Reject Box" shown in FIG. 7), and taking out of coins from the storing units 250b ("Verify Stacker" shown in FIG. 7) are not displayed unless two persons, the area manager and the tenant manager, are authenticated. As a result, a high security can be secured for the large quantity of money stored in the cash counting apparatus 21.

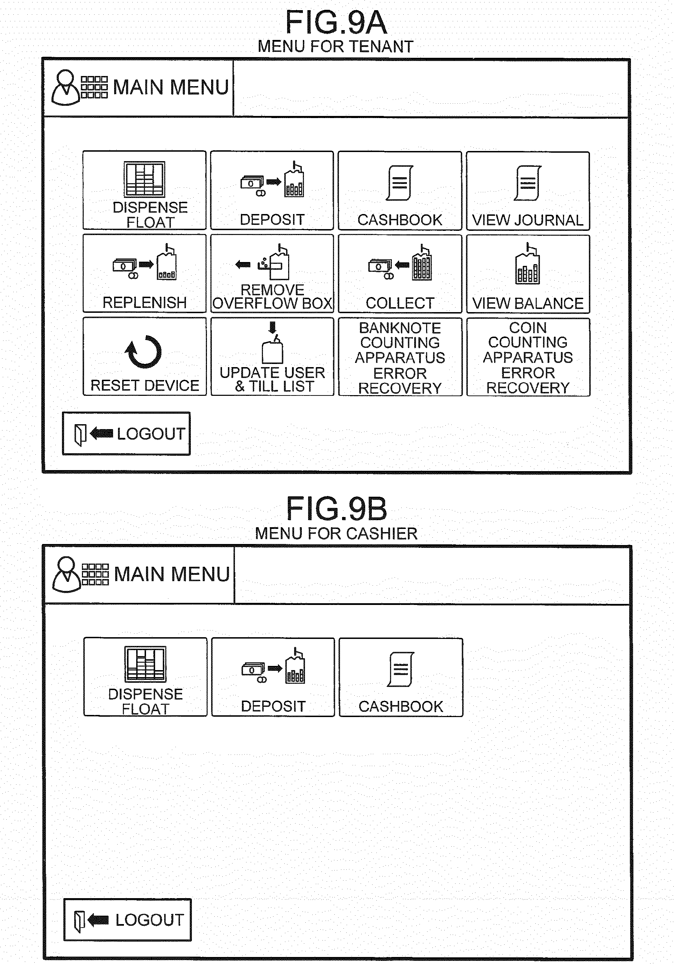

FIGS. 9A and 9B show examples of menus displayed on the screen of the terminal apparatus 295. FIG. 9A shows a screen on which a processing menu corresponding to "Tenant" of FIG. 7 is displayed. FIG. 9B shows a screen on which a processing menu corresponding to "Cashier" of FIG. 7 is displayed. In this manner, because only the processing menu corresponding to operation powers and authorities of the operator is displayed on the screen based on the authentication process result, it is prevented that a person executes a process by mistake though he/she has no powers and authorities to perform that process. Additionally, for example, as shown in FIG. 9B, only three processing menus allowed for the cashier are displayed when the cashier is the operator. The cashier can see in a glance all the information displayed on the screen and can execute the process.

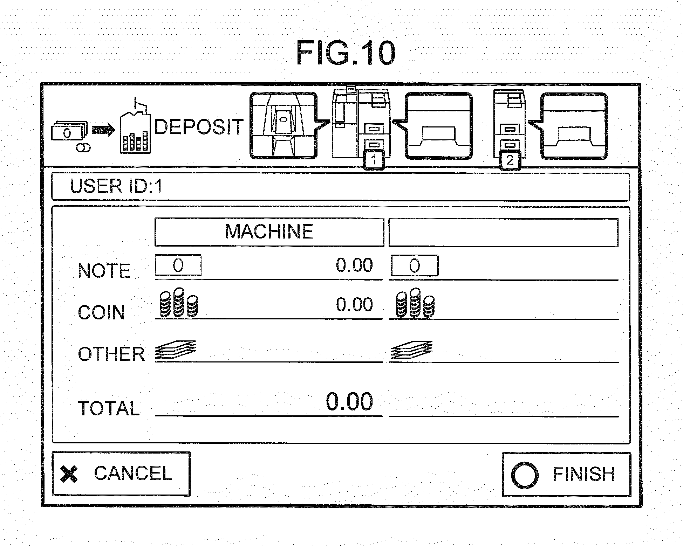

FIG. 10 is an example of a screen displayed when "Deposit" is selected corresponding to the deposit process on the screen shown in FIG. 9. In this manner, when performing the money handling, graphics such as thumbnail images of the external appearance of all the apparatuses constituting the cash counting apparatus 21 are displayed in an upper part of the screen. Moreover, a balloon window that contains information about each of the apparatuses is displayed beside the thumbnail image of the apparatus.

In the example shown in FIG. 10, in an upper part of the screen, three thumbnail images indicating the banknote counting apparatus 22 and the two coin counting apparatuses 23 are displayed from left to right according to the external appearance and the positional relationship of the cash counting apparatus 21 shown in FIG. 4. Moreover, to distinguish the two coin counting apparatuses 23 that have the same external appearance, number "1" is displayed below the thumbnail image of the coin counting apparatus 23 on the left, and number "2" is displayed below the coin counting apparatus 23 on the right.

Inside the balloon window displayed beside the thumbnail image of each apparatus, information about operation to be performed by the operator can be displayed by using characters, still pictures, movie, and the like. For example, when the operator of the cash counting apparatus 21 starts the deposit process, the screen for the deposit process is displayed as shown in FIG. 10. Information prompting the operator to put banknotes into the banknote counting apparatus 22 is displayed inside the balloon window corresponding to the thumbnail image of the banknote counting apparatus 22. In an example shown in FIG. 10, the guidance is given by displaying the part used for depositing and dispensing of the money in an enlarged manner in the balloon window.

In the deposit process, similarly, information that prompts to insert coins is displayed; however, at this time, the cash counting apparatus 21 determines as to in which of the two coin counting apparatuses 23 the coins should be deposited, and the information is displayed based on the determination result. Specifically, information that indicates which of the two coin counting apparatuses 23 is to be given priority can be set in the cash counting apparatus 21. Assuming that the setting is set so that the coin counting apparatus 23 on the left is to be given priority when depositing the coins. In this setting, on the screen shown in FIG. 10, information that prompts to insert coins is displayed inside the balloon window corresponding to the thumbnail image of the coin counting apparatus 23 on the left. At this time, for example, the thumbnail image of the coin counting apparatus 23 on the left and/or the number displayed below the thumbnail image can be displayed in a blinking manner. From such a display, the operator can grasp in which of the two coin counting apparatuses 23, which have the identical external appearance, the coins are to be inserted. The method of notifying by using the thumbnail image is not limited to causing the thumbnail image to blink. As long as it is possible to distinguish the image of the apparatus that needs attention from the image of the other apparatus, some other method can be used. For example, the color and/or the size of the image of the apparatus that needs attention can be changed.

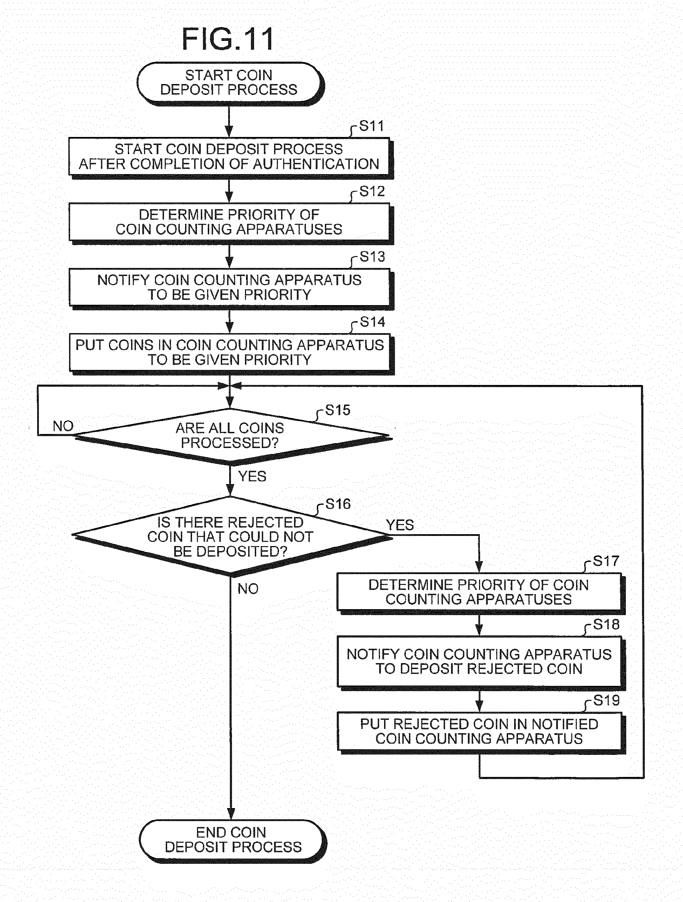

FIG. 11 is a flowchart of a coin deposit process performed after determining a priority of the coin counting apparatuses 23. The operator operates the terminal apparatus 295 to perform the authenticating process. After the operator was authenticated, the operator starts the deposit process (Step S11). When the deposit process is started, the terminal apparatus 295 determines the priority of all the coin counting apparatuses 23 constituting the cash counting apparatus 21 (Step S12).

Such determination of the priority is performed based on a setting made previously in the terminal apparatus 295. The priority is determined based on the denomination and the quantity of the coins stored in each of the coin counting apparatuses 23. Specifically, for example, if the coins are deposited in an apparatus in which a large number of coins have been already stored, it is possible that the corresponding storing unit 250b becomes full and all the coins cannot be deposited in one apparatus. Therefore, to deposit all the coins in one coin counting apparatus 23 as far as possible, it is set so that the number of coins that have been already stored in each of the coin counting apparatuses 23 is compared, and the coins are deposited with priority in the coin counting apparatus 23 in which the number of stored coins is the minimum. Alternatively, contrary to this setting, it is allowable to set so that the coins are deposited with priority in the coin counting apparatus 23 in which the number of stored coins is the maximum.

In the deposit process in which the cash is collected from the cash settlement apparatus 11 used in the check-out counter 10, information about the denomination and the quantity of the coins to be deposited in the cash counting apparatus 21 can be acquired from the cash management apparatus 25 that manages all the money processed in the cash management system 1. In the cash counting apparatus 21, the terminal apparatus 295 acquires information relating to the coins to be deposited, from the cash management apparatus 25. The cash counting apparatus 21 can determine the priority of depositing the coins in the coin counting apparatuses 23 based on the acquired information including the information relating to the denomination and the quantity of the coins stored in each of the coin counting apparatuses 23. For example, it can be set that the priority is set such that all the coins can be deposited in one coin counting apparatus 23 as far as possible. If there are two or more coin counting apparatuses 23 in which all the coins can be deposited, it can be set that the priority is set higher in the order of shorter the distance to the terminal apparatus 295.

When the coin counting apparatus 23 in which the coins are to be deposited with priority is determined based on priority set in this manner, information relating to the coin counting apparatus 23 to be given priority is notified to the operator (Step S13). Specifically, on the screen of the terminal apparatus 295, the operator is notified by a method such as blinking the thumbnail image of the coin counting apparatus 23 to be given priority or displaying information in a balloon that instructs the operator to deposit the coins into this coin counting apparatus 23. Such a notification can be performed by voice guidance. Alternatively, a light emitting element such as an LED can be arranged outside the housing of each of the coin counting apparatuses 23, and this light emitting element can be lit or blinked to notify the operator.

Based on the notice that indicates which coin counting apparatus 23 is to be given priority, the operator of the cash counting apparatus 21 puts the coins into the money depositing unit 210b of the coin counting apparatus 23 to be given priority, and starts the deposit process in this apparatus (Step S14).

The deposit process is continued until the all the coins received in the money depositing unit 210b are processed (Step S15: No). The coin that could not be deposited in a certain storing unit 250b of the coin counting apparatus 23, as the storing unit 250b of the coin counting apparatus 23 became full during the deposit process, is discharged in the outside reject unit 222b.

When the processing of all the coins received in the money depositing unit 210b is completed (Step S15: Yes), the terminal apparatus 295 determines whether there is a rejected coin as the corresponding storing unit 250b has become full (Step S16). If there is a coin that could not be deposited in the corresponding storing unit 250b of the coin counting apparatus 23 (Step S16: Yes), the terminal apparatus 295 executes a priority determination to select an apparatus for depositing the rejected coin from among the remaining coin counting apparatuses 23 other than the coin counting apparatus 23 that rejected the coin (Step S17). When this determination is finished, based on the obtained determination result, a notice that instructs the operator to deposit the rejected coin in the other coin counting apparatus 23 is displayed on the screen of the terminal apparatus 295 (Step S18). For example, if two coin counting apparatuses 23 are arranged in the cash counting apparatus 21, the operator is notified to deposit the rejected coin in the other apparatus. If three or more coin counting apparatuses 23 are arranged in the cash counting apparatus 21, like at Step S12, a determination of priority to select an apparatus for storing the rejected coin from among the remaining coin counting apparatuses 23 other than the coin counting apparatus 23 that rejected the coin as the corresponding storing unit 250b became full is performed and the obtained determination result is notified.

Upon seeing the notice displayed on the screen of the terminal apparatus 295, the operator takes out the coin rejected in the outside reject unit 222b, and puts this coin in the other coin counting apparatus 23 notified to the operator based on the priority determination (Step S19). In this manner, the processes at Step S15 and Steps S17 to S19 are repeated until all the coins are deposited in one or more coin counting apparatuses 23.

The coin deposit process is finished when all the coins are deposited in one or more coin counting apparatuses 23 (Step S16: No).

In this manner, when the cash counting apparatus 21 includes multiple coin counting apparatuses 23, the coin counting apparatus 23 to be prioritized for depositing the coins is determined based on the setting prepared previously in the terminal apparatus 295. Because the determination result of the priority determination is notified to the operator, even if two or more coin counting apparatuses 23, which have the identical external appearance, are arranged, the operator can perform the deposit process without wondering in which apparatus he/she should deposit the coins. Because only a desired number of the coin counting apparatuses 23 can be connected to the cash counting apparatus 21 and used, the storage quantity of coins of the cash counting apparatus 21 can be increased depending on the scale and the operation of the shop.

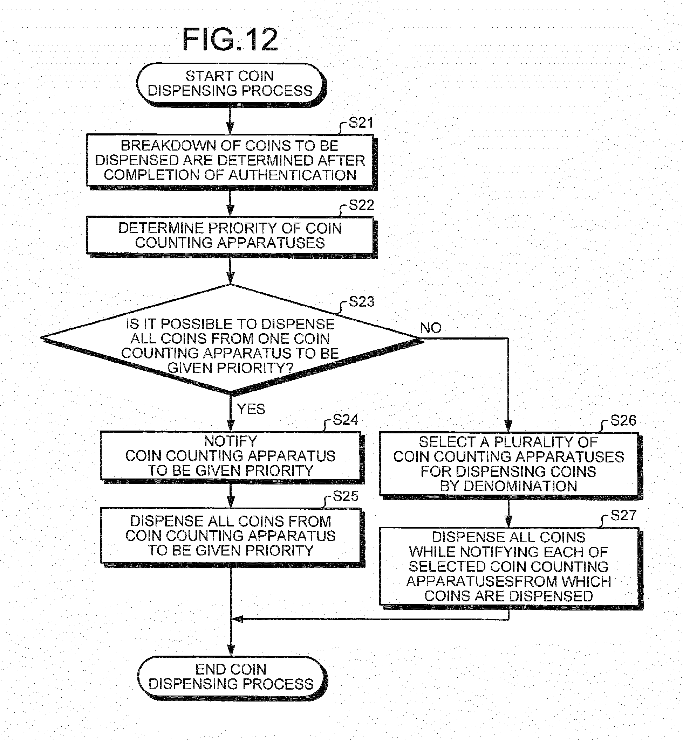

When performing the dispensing process for dispensing the coins from the cash counting apparatus 21 configured by connecting several coin counting apparatuses 23, no confusion occurs in the process even if the apparatuses have the identical external appearance. FIG. 12 is a flowchart of a coin dispensing process performed in the coin counting apparatuses 23 after determining the priority. The operator operates the terminal apparatus 295 to perform the authenticating process. After the operator was authenticated, the operator specifies a breakdown (denomination and quantity) of the coins to be dispensed and starts the dispensing process (Step S21). When the dispensing process is started, the terminal apparatus 295 determines the priority of all the coin counting apparatuses 23 constituting the cash counting apparatus 21 (Step S22). The breakdown of the coins to be dispensed can be specified by inputting the denomination and the quantity, or by selecting a dispensing pattern in which the denomination and the quantity are set previously.

The determination of the priority is performed depending on the setting set previously in the terminal apparatus 295. Specifically, in this setting, based on the denomination and the quantity of the coins to be dispensed input earlier and the information about the denomination and the quantity of the coins stored in each of the coin counting apparatuses 23, the priority of the coin counting apparatus 23 that should dispense the coins is determined such that all the coins are dispensed from one coin counting apparatus 23 as far as possible. If there are two or more coin counting apparatuses 23 that can dispense all the coins, it can be set that the priority is set higher in the order of shorter the distance to the terminal apparatus 295.

When it is possible to dispense all the coins from one coin counting apparatus 23 to be given priority (Step S23: Yes), information about this coin counting apparatus 23 to be given priority is notified to the operator (Step S24). Specifically, on the screen of the terminal apparatus 295, the operator is notified by a method such as blinking the thumbnail image of the coin counting apparatus 23 to be given priority or displaying information in a balloon that instructs the operator to deposit the coins from this coin counting apparatus 23. Such a notification can be performed by voice guidance. Alternatively, a light emitting element such as an LED can be arranged outside the housing of each of the coin counting apparatuses 23, and this light emitting element can be lit or blinked to notify the operator. Based on the notice that indicates which coin counting apparatus 23 is to be given priority, the operator of the cash counting apparatus 21 dispenses the coins from the coin counting apparatus 23 to be given priority, and finishes the coin dispensing process (Step S25).

On the other hand, when it is not possible to dispense all the coins from one coin counting apparatus 23 (Step S23: No), the terminal apparatus 295 selects two or more the coin counting apparatuses 23, from among all the coin counting apparatuses 23, as the apparatus that should dispenses the coins of a certain denomination (Step S26). Specifically, based on the denomination and the quantity of the coins to be dispensed input earlier and the information about the denomination and the quantity of the coins stored in each of the coin counting apparatuses 23, the coin counting apparatus 23 is selected such that the coins of the same denomination can be dispensed from one coin counting apparatus 23 as far as possible and the dispensing process can be completed by using as less number of the apparatuses as possible.

When two or more coin counting apparatuses 23 that shall dispense the coins are selected in this manner, each of the selected coin counting apparatuses 23 are sequentially notified to the operator. In response to the sequential notices, the operator collects all the coins dispensed from each of the selected coin counting apparatuses 23 (Step S27) and finishes the coin dispensing process.

In this manner, when the cash counting apparatus 21 includes multiple coin counting apparatuses 23, the coin counting apparatus 23 to be prioritized for dispensing the coins is determined based on the setting prepared previously in the terminal apparatus 295. Because the determination result of the priority determination is notified to the operator, even if two or more coin counting apparatuses 23, which have the identical external appearance, are arranged, the operator can perform the dispensing process without wondering from which apparatus he/she should dispense the coins.

In above example of the deposit process and the dispensing process of the coin, the priority of the coin counting apparatuses 23 that shall perform the deposit/dispensing process is determined based on the denomination and the quantity of the coins to be deposited/dispensed, the denomination and the quantity of the coins being stored in the coin counting apparatuses 23, and the like. In an aspect that is not claimed, instead of determining the priority based on the denomination and the quantity of the coins, the priority can be simply determined based on an installation position of the coin counting apparatuses 23. Specifically, for example, when the apparatuses constituting the cash counting apparatus 21 are arranged in the manner shown in FIG. 4, it is possible to set so as to give priority to the coin counting apparatus 23 on the left that is near the terminal apparatus 295.

In the cash counting apparatus 21, the terminal apparatus 295 determines the coin counting apparatus 23 that should execute the deposit/dispensing process with priority and notifies the determination result to the operator; however, it is allowable that the operator performs the deposit/dispensing process without following this notice. The determination result of the priority simply shows which apparatus is to be given priority when depositing the coins, and no issue arises even if the coins are deposited in an apparatus other than the coin counting apparatus 23 that is notified so as to be given priority. Therefore, the operator can perform the deposit/dispensing process of the coin without following the notice regarding the priority. However, by previously performing setting in the terminal apparatus 295, it is possible to set such that the deposit/dispensing process of the coin cannot be performed by using the coin counting apparatus 23 other than the coin counting apparatus 23 that is notified to the operator.

As explained above, according to the present embodiment, one or more coin counting apparatus 23 can be connected to the cash counting apparatus 21. As a result, a desired number of the coin counting apparatuses 23 can be arranged depending on the scale and the operations of the shop, and the storage quantity of coins of the cash counting apparatus 21 can be increased.

As long as the coin counting apparatus 23 is communicably connected to the terminal apparatus 295, the installation place of the coin counting apparatus 23 will not be particularly limited. Depending on the available installation space in the shop, how the cash counting device 21 is going to be used, and the like, all the coin counting apparatuses 23 can be installed in the same place, or some of the coin counting apparatuses 23 can be installed in a different place.

Though the coin counting apparatuses 23 having the identical external appearance are used, because the priority of the coin counting apparatuses 23 in performing the deposit/dispensing process is determined automatically and notified to the operator, the operator can perform the deposit/dispensing process by following the notice without wondering. Moreover, because the priority of the coin counting apparatus 23 that should perform the deposit/dispensing process can be set such that the movement of the operator is the minimum, the operator can complete the deposit/dispensing process without making unnecessary movements by simply performing the deposit/dispensing process based on the notice.

When several coin counting apparatuses 23 are used, all the processes necessary to use the several coin counting apparatuses 23 such as the priority determination of the coin counting apparatuses 23, notifying the coin counting apparatus 23 that should perform the deposit/dispensing process of the money, and the like can be performed in the terminal apparatus 295. As a result, even in the shop that uses the conventional cash counting apparatus 21, by simply installing the terminal apparatus 295 according to the present embodiment, new coin counting apparatus 23 can be arranged in addition to the conventional coin counting apparatus 23, and used. Therefore, the cost to implement the cash management system 1 according to the present embodiment 1 can be reduced.

### [Industrial Applicability]

As explained above, the money handling system according to the present invention is capable of increasing a storage quantity of coins of a money handling apparatus used in a back office of a shop based on the requirement of the shop.

### [Explanation of Reference Numerals]

1 Cash management system
10 Check-out counter
11 Cash settlement apparatus
20 Back office
21 Cash counting apparatus
22 Banknote counting apparatus
23 Coin counting apparatus
25 Cash management apparatus
26 POS management apparatus
30 Cash transport cassette
200a, 200b Housing
201a, 201b Front cover
210, 210a, 210b Money depositing unit
211 Loose money feed unit
211a Loose banknote feed unit
220, 220a, 220b Money dispensing unit
222, 222a, 222b Outside reject unit
224, 224a Inside reject unit
230, 230a, 230b Transport unit
233b, 253b Feeding unit
235b Escrow unit
236b, 256b chute
240, 240a, 240b Recognition unit
250, 250a, 250b Storing unit
254a Collection and stacking unit
255, 255a, 255b Collecting unit
257 Read/write unit
258b Drawer
259b Overflow box
260b Drawer mounting unit
270 Memory
280 Communication unit
290 Control unit
295 Terminal apparatus
295 Terminal apparatus

## Claims

1. A money handling system (1) comprising:
a banknote handling apparatus (22) configured to perform a banknote deposit process and a banknote dispensing process;
a plurality of coin handling apparatuses (23) each configured to perform a coin deposit process and a coin dispensing process; and
a terminal apparatus (295) configured to receive an instruction to perform the coin deposit process or the coin dispensing process and select, based on a denomination and a quantity of coins stored in each coin handling apparatus (23), at least one coin handling apparatus (23) to perform an instructed process from among the plurality of coin handling apparatuses (23) .

2. The money handling system (1) as claimed in claim 1, wherein the banknote handling apparatus (22) and the plurality of coin handling apparatuses (23) are arranged side by side.

3. The money handling system (1) as claimed in claim 1 or claim 2, wherein
the terminal apparatus (295) is configured to select one coin handling apparatus (23) capable of handling all coins to be processed in the instructed process, as the at least one coin handling apparatus (23) to perform the instructed process.

4. The money handling system (1) as claimed in claim 1 or claim 2, wherein
when the instruction is for performing the coin dispensing process that includes specification of a denomination and a quantity of coins to be dispensed, the terminal apparatus (295) is configured to select the at least one coin handling apparatus (23) to perform the instructed process such that the coins of the same denomination are dispensed from the same coin handling apparatus (23).

5. The money handling system (1) as claimed in any one of claims 1 to 4, wherein
the terminal apparatus (295) is configured to select, based on a positional relationship of installation positions of the plurality of coin handling apparatuses (23), the at least one coin handling apparatus (23) to perform the instructed process from among the plurality of coin handling apparatuses (23).

6. The money handling system (1) as claimed in any one of claims 1 to 5, wherein
after selecting the at least one coin handling apparatus (23) to perform the instructed process from among the plurality of coin handling apparatuses (23), the terminal apparatus (295) is configured to notify of selected at least one coin handling apparatus (23).

7. The money handling system (1) as claimed in claim 6, wherein
the terminal apparatus (295) is configured to display a thumbnail image of each coin handling apparatus (23) in accordance with the installation positions of the plurality of coin handling apparatuses (23), and notify selection result by displaying the thumbnail image of the selected at least one coin handling apparatus (23) to perform the instructed process, in a distinguishable manner from the thumbnail images of other coin handling apparatuses (23).

8. The money handling system (1) as claimed in any one of claims 1 to 7, wherein
after an instructed coin deposit process is performed by the at least one coin handling apparatus (23) selected from among the plurality of coin handling apparatuses (23),
if there is a reject coin that is rejected without being stored in the at least one coin handling apparatus (23), the terminal apparatus (295) is configured to notify of instructions to deposit the reject coin in another coin handling apparatus (23) .

9. The money handling system (1) as claimed in any one of claims 1 to 8, wherein
the banknote handling apparatus (22), the plurality of coin handling apparatuses (23), and the terminal apparatus (295) constitute a cash counting apparatus (21).

## Patentansprüche

1. Geldhandhabungssystem (1), aufweisend:
eine Geldscheinhandhabungsvorrichtung (22), die ausgestaltet ist, um einen Geldscheineinlageprozess und einen Geldscheinabgabeprozess durchzuführen; mehrere Münzhandhabungsvorrichtungen (23), die jeweils ausgestaltet sind, um einen Münzeinlageprozess und einen Münzausgabeprozess durchzuführen; und
eine Endvorrichtung (295), die ausgestaltet ist, um eine Anweisung zu empfangen, um den Münzeinlageprozess oder den Münzausgabeprozesses durchzuführen, und basierend auf einem Nennwert und einer Menge von in jeder Münzhandhabungsvorrichtung (23) gespeicherten Münzen wenigstens eine Münzhandhabungsvorrichtung (23) auszuwählen, um einen angewiesenen Prozess aus den mehreren Münzhandhabungsvorrichtungen (23) durchzuführen.

2. Geldhandhabungssystem (1) nach Anspruch 1, bei welchem die Geldscheinhandhabungsvorrichtung (22) und die mehreren Münzhandhabungsvorrichtungen (23) nebeneinander angeordnet sind.

3. Geldhandhabungssystem (1) nach Anspruch 1 oder Anspruch 2, bei welchem die Endvorrichtung (295) konfiguriert ist, um eine Münzhandhabungsvorrichtung (23), die in der Lage ist, alle in dem angewiesenen Prozess zu verarbeitenden Münzen zu handhaben, als die wenigstens eine Münzhandhabungsvorrichtung (23) auszuwählen, um den angewiesenen Prozess durchzuführen.

4. Geldhandhabungssystem (1) nach Anspruch 1 oder 2, bei welchem,
wenn die Anweisung zum Durchführen des Münzausgabeprozesses ist, der die Spezifikation eines Nennwerts und einer Menge von auszugebenden Münzen enthält, die Endvorrichtung (295) konfiguriert ist, um die wenigstens eine Münzhandhabungsvorrichtung (23) auszuwählen, um den angewiesenen Prozess so durchzuführen, dass die Münzen des gleichen Nennwerts aus der gleichen Münzhandhabungsvorrichtung (23) ausgegeben werden.

5. Geldhandhabungssystem (1) nach einem der Ansprüche 1 bis 4, bei welchem die Endvorrichtung (295) konfiguriert ist, um basierend auf einer Positionsbeziehung von Einbaupositionen der mehreren Münzhandhabungsvorrichtungen (23) die wenigstens eine Münzhandhabungsvorrichtung (23) auszuwählen, um den angewiesenen Prozess aus den mehreren Münzhandhabungsvorrichtungen (23) durchzuführen.

6. Geldhandhabungssystem (1) nach einem der Ansprüche 1 bis 5, bei welchem nach dem Auswählen der wenigstens einen Münzhandhabungsvorrichtung (23), um den angewiesenen Prozess aus den mehreren Münzhandhabungsvorrichtungen (23) durchzuführen, die Endvorrichtung (295) konfiguriert ist, um die ausgewählte wenigstens eine Münzhandhabungsvorrichtung (23) zu benachrichtigen.

7. Geldhandhabungssystem (1) nach Anspruch 6, bei welchem
die Endvorrichtung (295) konfiguriert ist, um ein Miniaturbild jeder Münzhandhabungsvorrichtung (23) gemäß den Installationspositionen der mehreren Münzhandhabungsvorrichtungen (23) anzuzeigen und das Auswahlergebnis durch Anzeigen des Miniaturbilds der ausgewählten wenigstens einen Münzhandhabungsvorrichtung (23) in einer unterscheidbaren Weise von den Miniaturbildern anderer Münzhandhabungsvorrichtungen (23) zu benachrichtigen, um den angewiesenen Prozess durchzuführen.

8. Geldhandhabungssystem (1) nach einem der Ansprüche 1 bis 7, bei welchem, nachdem ein angewiesener Münzeinlageprozess von der wenigstens einen Münzhandhabungsvorrichtung (23), die aus den mehreren Münzhandhabungsvorrichtungen (23) ausgewählt ist, durchgeführt wird,
wenn es eine Ausschussmünze gibt, die zurückgewiesen wird, ohne in der wenigstens einen Münzhandhabungsvorrichtung (23) gespeichert zu werden, die Endvorrichtung (295) konfiguriert, um Anweisungen zu benachrichtigen, um die Ausschussmünze in einer anderen Münzhandhabungsvorrichtung (23) einzulegen.

9. Geldhandhabungssystem (1) nach einem der Ansprüche 1 bis 8, bei welchem die Geldscheinhandhabungsvorrichtung (22), die mehreren Münzhandhabungsvorrichtungen (23) und die Endvorrichtung (295) eine Bargeldzählvorrichtung (21) bilden.

## Revendications

1. Système de manipulation d'argent (1) comprenant :
un appareil de manipulation de billets de banque (22) configuré pour effectuer un processus de dépôt de billets de banque et un processus de distribution de billets de banque ;
une pluralité d'appareils de manipulation de pièces de monnaie (23), chacun étant configuré pour effectuer un processus de dépôt de pièces de monnaie et un processus de distribution de pièces de monnaie ; et
un appareil terminal (295) configuré pour recevoir une consigne d'effectuer le processus de dépôt de pièces de monnaie ou le processus de distribution de pièces de monnaie et de sélectionner, sur la base d'une dénomination et d'une quantité de pièces de monnaie stockées dans chaque appareil de manipulation de pièces de monnaie (23), au moins un appareil de manipulation de pièces de monnaie (23) pour effectuer un processus soumis à la consigne parmi la pluralité d'appareils de manipulation de pièces de monnaie (23).

2. Système de manipulation d'argent (1) selon la revendication 1, dans lequel l'appareil de manipulation de billets de banque (22) et la pluralité d'appareils de manipulation de pièces de monnaie (23) sont disposés côte à côte.

3. Système de manipulation d'argent (1) selon la revendication 1 ou 2, dans lequel :
l'appareil terminal (295) est configuré pour sélectionner un appareil de manipulation de pièces de monnaie (23) capable de manipuler toutes les pièces de monnaie à traiter dans le processus soumis à la consigne, comme ledit au moins un appareil de manipulation de pièces de monnaie (23) pour effectuer le processus soumis à la consigne.

4. Système de manipulation d'argent (1) selon la revendication 1 ou 2, dans lequel :
lorsque la consigne est d'effectuer le processus de distribution de pièces de monnaie qui inclut la spécification d'une dénomination et d'une quantité de pièces de monnaie à distribuer, l'appareil terminal (295) est configuré pour sélectionner ledit au moins un appareil de manipulation de pièces de monnaie (23) pour effectuer le processus soumis à la consigne de sorte que les pièces de monnaie de la même dénomination soient distribuées à partir du même appareil de manipulation de pièces de monnaie (23).

5. Système de manipulation d'argent (1) selon l'une quelconque des revendications 1 à 4, dans lequel :
l'appareil terminal (295) est configuré pour sélectionner, sur la base d'une relation de position des positions d'installation de la pluralité d'appareils de manipulation de pièces de monnaie (23), ledit au moins un appareil de manipulation de pièces de monnaie (23) pour effectuer le processus soumis à la consigne parmi la pluralité d'appareils de manipulation de pièces de monnaie (23).

6. Système de manipulation d'argent (1) selon l'une quelconque des revendications 1 à 5, dans lequel :
après avoir sélectionné ledit au moins un appareil de manipulation de pièces de monnaie (23) pour effectuer le processus soumis à la consigne parmi la pluralité d'appareils de manipulation de pièces de monnaie (23), l'appareil terminal (295) est configuré pour informer dudit au moins un appareil de manipulation de pièces de monnaie (23) sélectionné.

7. Système de manipulation d'argent (1) selon la revendication 6, dans lequel :
l'appareil terminal (295) est configuré pour afficher une image miniature de chaque appareil de manipulation de pièces de monnaie (23) conformément aux positions d'installation de la pluralité d'appareils de manipulation de pièces de monnaie (23), et pour notifier le résultat de la sélection en affichant l'image miniature dudit au moins un appareil de manipulation de pièces de monnaie (23) sélectionné pour effectuer le processus soumis à la consigne, d'une manière qui se distingue de celle des images miniatures d'autres appareils de manipulation de pièces de monnaie (23).

8. Système de manipulation d'argent (1) selon l'une quelconque des revendications 1 à 7, dans lequel :
après qu'un processus de dépôt de pièces de monnaie soumis à la consigne est effectué par ledit au moins un appareil de manipulation de pièces de monnaie (23) sélectionné parmi la pluralité d'appareils de manipulation de pièces de monnaie (23),
s'il y a une pièce de monnaie rejetée qui est rejetée sans être stockée dans ledit au moins un appareil de manipulation de pièces de monnaie (23), l'appareil terminal (295) est configuré pour informer des consignes de déposer la pièce de monnaie rejetée dans un autre appareil de manipulation de pièces de monnaie (23).

9. Système de manipulation d'argent (1) selon l'une quelconque des revendications 1 à 8, dans lequel :
l'appareil de manipulation de billets de banque (22), la pluralité d'appareils de manipulation de pièces de monnaie (23) et l'appareil terminal (295) constituent un appareil de comptage d'argent liquide (21).
